# EUROPEAN PATENT SPECIFICATION

(11) **EP 0 265 972 B1**
(45) Date of publication and mention of the grant of the patent: **22.02.1995**
(21) Application number: 87116007.3
(22) Date of filing: 30.10.1987
(51) Int. Cl.: G06F 9/32

(54) **Control of the program counter used in a pipelined computer**
Steuerung des Befehlszählers in einem Rechner mit Fliessbandverarbeitung
Contrôle du compteur d'instruction dans un ordinateur pipe-line

(30) Priority: 30.10.1986 JP 259866/86
(43) Date of publication of application: 04.05.1988
(73) Proprietor: NEC CORPORATION, Tokyo (JP)
(72) Inventor: Ooi, Yasushi, Minato-ku Tokyo (JP); Sato, Yoshikuni, Minato-ku Tokyo (JP)
(74) Representative: Glawe, Delfs, Moll & Partner

(56) References cited:
- EP-A- 0 148 478
- EP-A- 0 150 506
- GB-A- 2 138 182
- US-A- 4 200 927

## Description

The present invention relates to a pipelined computer, and more specifically, to a control of a program counter used in a pipelined computer.

### Description of related art

In advanced computers, the architecture has been improved in various points so as to comply with high level languages and a common operation system. Particularly, a relocatable program has been widely used, since standard programs can be placed at any location in an address space. This is very advantageous in such an environment that the same program is used in a plurality of situations.

As a means for easily realizing the relocatable program, there is a so-called program counter/relative addressing mode, which can minimize modification of code required to relocate the program. Various central processing units which realize the program counter/relative addressing mode have already been used. As regards the details, reference should be made to, for example, "VAX Architecture Handbook", Digital Equipment Corporation; "MC 68020 User's Manual", Motorola, Inc.; "Z80000 CPU Technical Manual", Zilog; "NS 32032 Instruction Set Reference Manual", National Semiconductor Corp., etc.

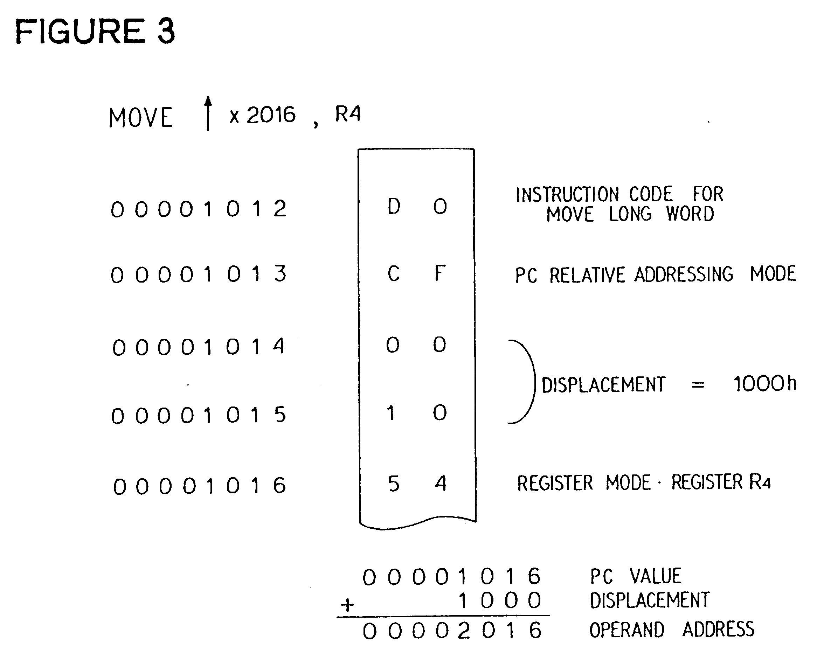

In most of the conventional central processing units having the program counter/relative addressing mode, the architecture adopts a hardware structure processing the instruction decoding and the operand address calculation without distinguishing them from each other. Therefore, it has been ordinary that the value of a program counter at the time of address calculation indicates a head or a tail of one portion of a given instruction which includes the information relating to the address calculation. For example, reference can be made to the program counter/relative addressing adopted in the VAX-11 machine of Digital Equipment Corporation. The above referred "VAX Architecture Handbook" shows on page 110 one example of an instruction "MOVE LONG WORD" in the VAX-11 machine. This example is shown in Figure 3. The address of the first operand is not an instruction head address "00001012ₕ" (the surfix "h" means a hexadecimal notation), but "00002016ₕ" obtained by adding the displacement "1000ₕ" to the address "00001016" of the tail of a portion including the information concerning the address of the first operand.

In the prior art, in the case of modifying the hardware architecture of the central processing unit so as to improve its performance while maintaining compatibility at the object code level, it has been necessary to quickly obtain the value of the program counter required in calculation of the program counter/relative address, i.e., an intermediate result of the program counter modified in accordance with the progress of the instruction decoding operation. However, a instruction set having a high level function and a plurality of instructions has been heretofore expressed in the form of a variable word length instruction. In addition, the length of the instruction is greatly dependent upon the content of the instruction itself. For example, the length of the instruction is dependent upon:
(1) the number of operands designated by the instruction (0th operand, 1st operand, 2nd operand, ...);
(2) the addressing information of the operand (additional information such as index modification, displacement, immediate data, etc.);
(3) the encoding of the instruction operation (instructions having a high use frequency are encoded as short as possible).

JP-B-59-31733 discloses one example of the program counter/relative address calculation in the above mentioned manner of VAX-11, and this arrangement corresponds to the preamble of claim 1. In this example, not only the displacement "1000ₕ" but also one byte defining the operation of an instruction, another byte indicating that the first operand is the program counter/relative addressing, and two bytes showing the displacement for the address calculation of the first operand must be added to the head address "00001012ₕ" of the instruction.

As seen from the above, the fact that the result of the instruction decoding operation is used in the operand address calculation, means that the two kinds of operation have a high mutual dependence. In other words, the two kinds of operation have only a small independence to each other. This is one hindrance in increasing a parallel processibility of the two kinds of operations. This inclination is enhanced if there is added a high level function program counter/relative addressing mode such as index.

From a different view point, the increase of the elements to be added for the address calculation is disadvantageous to the variable word length instruction. Particularly, the address calculation of 32 bits or more is inconvenient to a carry transfer control. Specifically, one or more times of calculation are required at the time of the address calculation in order to amend the program counter indicating the head of the current instruction. In this case, a carry must be transferred over a long bit length of 32 bits or more. Therefore, the timing of control is limited since it must wait for the transfer of the carry. In order to overcome this problem, a "carry lookahead" method or a "carry reservation" method can be used for the speed-up the operation. But, an additional hardware resource is necessary for executing such a method, and so, it is expensive.

Accordingly, it is an object of the present invention to provide a program counter/relative address calculation system which is free from the above mentioned drawback.

Another object of the present invention is to provide a program counter/relative address calculation system capable of executing an instruction decoding and an operand address calculation in parallel in a pipelined processor.

A further object of the present invention is to provide a pipelined processor capable of executing an instruction decoding and an operand address calculation in parallel.

The above and other objects of the present invention are achieved in accordance with the present invention by a processor as defined in claim 1; the dependent claims are related to further developments of the invention.

With the arrangement according to the invention, the means for updating the program counter for a next instruction and the means for executing the effective address calculation are provided independently of each other, and therefore, can be controlled independently of each other. In addition, in the process of the effective address calculation, the effective address calculation means can use the value of the program counter before the program counter is updated to the address of the next instruction. Accordingly, the updating of the program counter and the effective address calculation can be concurrently executed, so that the degree of a parallel processing for instruction decoding can be increased.

In a preferred embodiment, there is provided an adder used only for offsetting the program counter. In this case, the number or time of long bit data addition made directly to the program counter can be decreased. Thus, it is possible to enhance the performance of individual operations in the processor.

The above and other objects, features and advantages of the present invention will be apparent from the following description of the preferred embodiment of the invention with reference to the accompanying drawings.

### Brief Description of the Drawings

Figure 1 is a block diagram of one embodiment of the address calculation system in accordance with the present invention;
Figure 2 is a timing chart illustrating an operation of the system shown in Figure 1; and
Figure 3 illustrates one calculation example of the conventional program counter/relative addressing.

### Description of the Preferred Embodiment

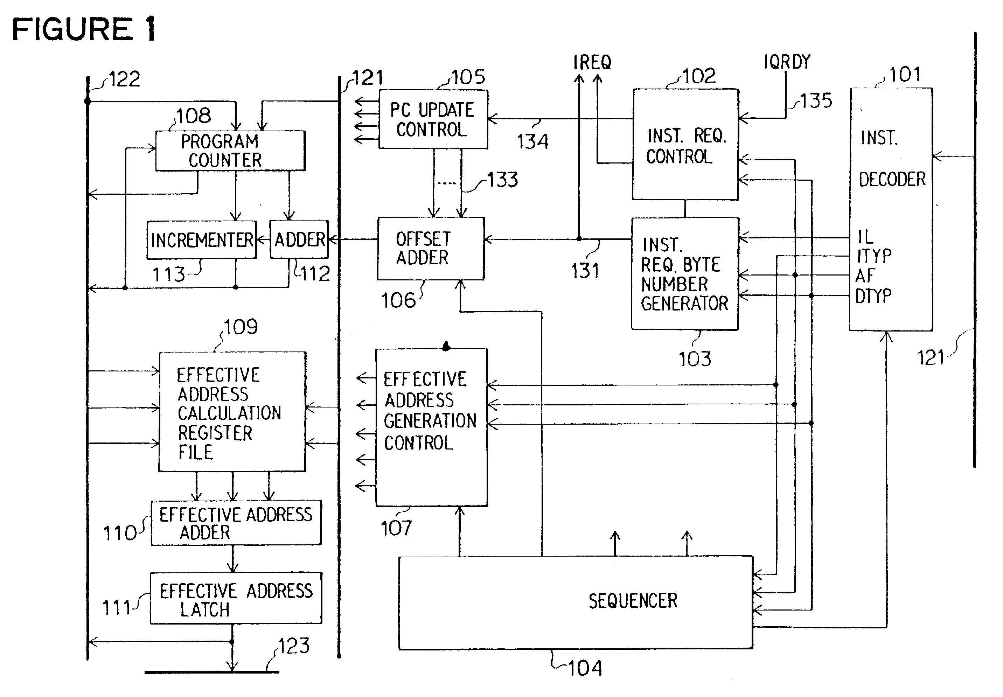

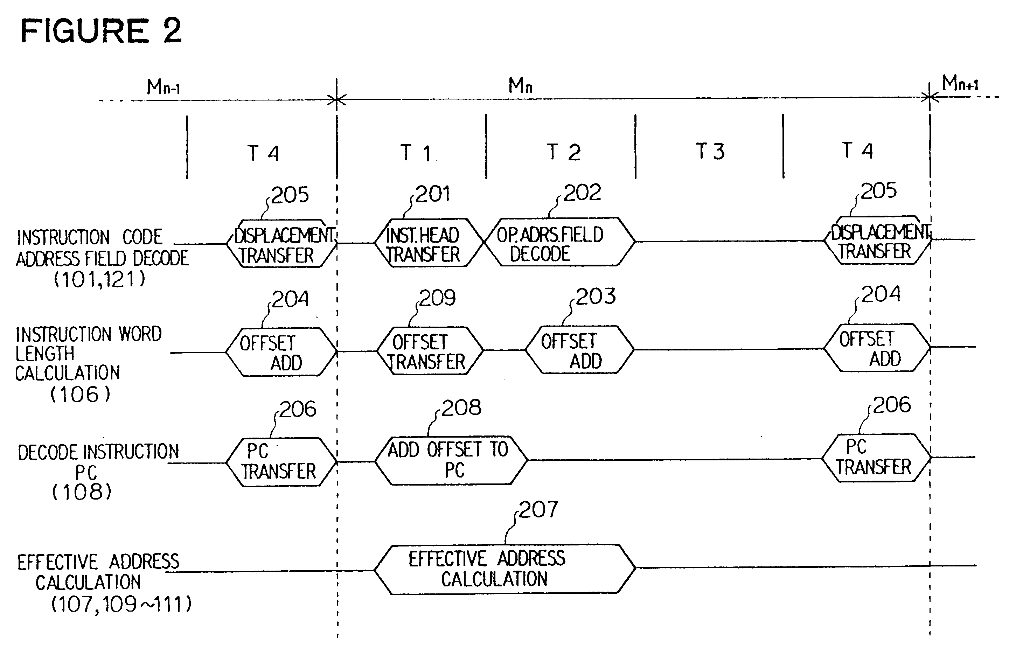

Referring to Figure 1, there is shown one embodiment of the program counter/relative address calculation system in accordance with the present invention. Figure 2 illustrates the timing chart for one operation example of the system. In Figure 2, there are shown three cycles Mₙ₋₁, Mₙ and Mₙ₊₁, each cycle being divided into four timings T1, T2, T3 and T4.

The shown system includes an instruction decoder 101 coupled to an instruction bus 121 and controlled by a sequence controller 104 for instruction decoding, which also controls the operation timing of other various elements contained in the system. The decoder 101 receives an instruction from the bus 121 at a timing T1 (201) of each cycle shown in Figure 2, and decodes an instruction code and an address field contained in the received instruction at a timing T2 (202) of each cycle. Then, the decoder 101 generates an instruction code length IL, an instruction type ITYP, an address field information AF, and an operand data type DTYP. The instruction code length IL is notified to an instruction request byte number generator 103, and the instruction type ITYP is informed to the sequence controller 104 and an effective address generation controller 107. The address field information AF and the operand data type DTYP are supplied to an instruction request controller 102, the sequence controller 104 and the effective address generation controller 107. As the result of the decoding, for example, IL indicates that the instruction code length is one byte, and ITYP shows that a given instruction is an operation instruction having two operands. AF indicates that a first operand has the program counter/relative addressing mode having a displacement of 16 bytes, and a second operand indicates the register. DTYP shows the data length of 32 bits.

The instruction request byte number generator 103 calculates the byte number of an instruction word required in the next decoding cycle, on the basis of the decoded result of the whole or a first one portion or the given instruction word given by the decoder 101. But, this byte number depends upon the instruction length which can be decoded by the decoder 101 at one decoding cycle. In this embodiment, the decoder 101 has a sufficient decoding capacity to decode at one decoding cycle all the contents of IL, ITYP, AF and DTYP, excluding some exceptional cases. The instruction request byte number generator 103 is controlled by the instruction request controller 102 and supplied from its output 131 the byte number data, which is inputted to the program counter offset adder 106. The output 131 of the instruction request byte number generator 103 and an output 132 of the instruction request controller 102 constitute together an instruction request signal IREQ. Specifically, the outputs 131 and 132 form an interface signal for an instruction queue having an alignment ability.

The instruction request controller 102 has another output 134 coupled to a program counter update controller 105. The offset adder 106 is reset at the timing T1 (209) and added with the output 131 at the timing T2 (203). This operation of the offset adder 106 is controlled by the update controller 105 through control lines 133. The operation of the update controller 105 is controlled by the output 134 of the instruction request controller 102. Particularly, the update controller 105 modifies the offset adder 106 when in the preceding decoding cycle the instruction word length is smaller than the length which can be decoded at the current decoding cycle.

The shown system also includes a program counter 103 for instruction decoding, which is coupled to the instruction bus 121 and an effective address calculation bus 122. The program counter 108 is associated with an adder 112 and an incrementer 113 coupled as shown. The shown system further includes a register file 109 for effective address calculation coupled to the instruction bus 121 and the effective address calculation bus 122. The register file 109 is also coupled at its output to an effective address adder 110, which is coupled to an effective address latch 111. This latch is coupled to the bus 122 and an operand address bus 123.

Operation will be now explained with reference to the timing chart shown in Figure 2.

If an instruction can be obtained from the instruction queue in response to the outputs 131 and 132 (IREQ), an instruction queue ready IQRDY is inputted to the instruction request controller 102. In the operation example shown in Figure 2, it is assumed that at a second decoding cycle T3, the decoding is not carried out, and a displacement for effective address calculation is then fed on the instruction bus 121 at a timing T4 (205). Whether or not this displacement transfer (205) should be executed is discriminated by the sequence controller 104 and the effective address generation controller 107 on the basis of the decoded information (IL, ITYP, AF, DTYP). Further, at the timing T4 (204), the output 131 is added in the offset adder 106.

As mentioned above, if the addressing mode of the operand is the program counter/relative addressing, the effective address generation controller 107 causes the content (the displacement data) of the instruction bus 121 to be latched to one register of the effective address calculation register file 109, as shown in 205, and at the same time, the value of the program counter 108 to be outputted to the effective address calculation bus 122 so that the value is latched to another register of the register file 109, shown by 206. Subsequentially, as shown by 207, the address calculation is started from the timing T1 by the address adder 110 on the above mentioned two latched data. At the same time, as shown by 209, the offset adder 106 outputs the summed value of the instruction length for the current instruction to the adder 112 associated to the program counter 108, so that the program counter 108 is updated by the incrementer 113 and the adder 112 under the control of the update controller 105, as shown by 208.

Accordingly, there are concurrently executed in the cycle Mₙ the effective address calculation on the basis of the instruction decoded in the preceding cycle Mₙ₋₁ and the updating of the program counter on the basis of the output of the program counter offset adder.

## Claims

1. A processor comprising a program counter (108) used for indicating an instruction address to be read, means (112, 113) coupled to the pogram counter for updating the program counter, means (109, 110, 111) coupled to the program counter for executing an effective address calculation, **characterized** by means (105, 107) for independently controlling the updating means (112) and the effective address calculation means (109), and means for causing the effective address caculation means to be supplied with the value of the program counter before the updating of the programm counter to the address of the next instruction.

2. A processor as claimed in claim 1, wherein the processor is capable of processing a variable word length instruction, said program counter (108) being controlled to indicate the head of an instruction by the value of the program counter (108), further comprising means (106) for summing the length of decoded portions in the variable word length instruction in accordance with the progress of the instruction decoding, said updating comprising means (112) for adding the length of the decoded instruction portions to the program counter, and said effective address calculation means (109, 110, 111) generating a program counter relative operand effective address by using the value of the program counter (108) in the course of the variable word length instruction decoding, so that the updating of the program counter (108) and the generation of the effective address are concurrently executed.

3. A processor claimed in claim 2 further including an adder (106) used only for offsetting the program counter (108) so that the number or time of long bit data addition made directly to the program counter can be decreased.

4. A processor as claimed in claim 1, wherein said program counter (108) is coupled to an instruction bus (121) and a bus (122) for effective address calculation, said updating means comprising an incrementer (113) and an adder (112), said processor further comprising a register file coupled to the instruction bus and the effective address calculation bus to register data on these buses, an effective address calculation adder (110) coupled to the register file (109) to receive necessary data, an effective address latch (111) coupled to the effective address calculation adder (110) and outputting the calculated effective address to the effective address calculation bus (122), an instruction decoder (101) being coupled to the instruction bus (121) for generating a decoded data, an instruction request controller (102) coupled to receive the decoded data, an instruction request byte number generator (103) coupled to receive the decoded data to generate the byte number information, a program counter update controller (105) controlled by the instruction request controller (102) so as to control the update of the program counter, a program counter offset adder (133) coupled to the instruction request byte number generator (103) and the program counter update controller (105) to supply an offset value to the adder (106) associated to the program counter, and an effective address generation controller (107) coupled to receive the decoded data and for controlling the register file (109) and the effective address adder (110), whereby the updating of the program counter and the generation of the effective address are concurrently executed.

## Patentansprüche

1. Prozessor mit einem Programmzähler (108) zum Anzeigen einer zu lesenden Befehlsadresse, Mitteln (112, 113), die mit dem Programmzähler verbunden sind, zum Aktualisieren des Programmzählers, Mitteln (109, 110, 111), die mit dem Programmzähler verbunden sind, zum Durchführen einer Effektivadressen-Berechnung,
**gekennzeichnet** durch Mittel (105, 107) zum unabhängigen Steuern der Aktualisierungsmittel (112) und der Effektivadressen-Berechnungsmittel (109) und Mittel zum Veranlassen, daß die Effektivadressen-Berechnungsmittel mit dem Wert des Programmzählers vor dem Aktualisieren des Programmzählers auf die Adresse des nächsten Befehls versorgt wird.

2. Prozessor nach Anspruch 1,
wobei der Prozessor in der Lage ist, einen Befehl mit variabler Wortlänge zu verarbeiten, wobei der Programmzähler (108) gesteuert wird, um den Kopf eines Befehls durch den Wert des Programmzählers (108) anzuzeigen, und mit ferner Mitteln (106) zur Summierung der Länge dekodierter Teile des Befehls variabler Wortlänge entsprechend dem Voranschreiten der Befehlsdekodierung, wobei das Aktualisieren Mittel (112) aufweist zum Addieren der Länge der dekodierten Teile zum Programmzähler und wobei die Effektivadressen-Berechnungsmittel (109, 110, 111) eine Programmzähler-Relativoperanden- Effektivadresse erzeugen durch Verwendung des Wertes des Programmzählers (108) bei dem Dekodieren des Befehls variabler Wortlänge, so daß das Aktualisieren des Programmzählers (108) und die Erzeugung der Effektivadresse gleichzeitig durchgeführt werden.

3. Prozessor nach Anspruch 2,
mit ferner einem Addierer (106) für nur die Versatzeinstellung des Programmzählers (108), so daß die Anzahl oder die Zeit der Langbitdatenaddition, die direkt für den Programmzähler durchgeführt wird, vermindert werden kann.

4. Prozessor nach Anspruch 1,
wobei der Programmzähler (108) mit einem Befehlsbus (121) und einem Bus (122) für die Effektivadressenberechnung gekoppelt ist, wobei die Aktualisierungsmittel einen Inkrementer (113) und einen Addierer (112) aufweisen, wobei der Prozessor ferner ein Registerfile aufweist, das mit dem Befehlsbus und den Effektivadress-Berechnungsbus gekoppelt ist, um Daten auf diesen Bussen zu registrieren, einen Effektivadressen-Berechnungsaddierer (110), der mit dem Registerfile (109) gekoppelt ist, zum Empfang notwendiger Daten, eine Effektivadressen-Halteeinrichtung (111), die mit dem Effektivadressen-Berechnungsaddierer (110) verbunden ist und die berechnete Effektivadresse an den Effektivadressen-Berechnungsbus (122) ausgibt, einen Befehlsdekoder (101), der mit dem Befehlsbus (121) gekoppelt ist, zur Erzeugung eines dekodierten Datums, einen Befehlsanforderungskontroller (102), der zum Empfang der dekodierten Daten verbunden ist, einen Befehlsanforderung-Byteanzahl-Generator (103), der zum Empfang des dekodierten Datums zur Erzeugung der Bytezahlinformation verbunden ist, einen Programmzähler-Aktualisierungskontroller (105), der durch den Befehlsanforderungskontroller (102) gesteuert wird, so daß er die Aktualisierung des Programmzählers steuert, einen Programmzähler-Versatzaddierer (133), der mit dem Befehlsanforderungs-Bytezahlgenerator (103) und dem Programmzähler-Aktualisierungskontroller (105) gekoppelt ist, zur Zuführung eines Versatzwertes an den Addierer (106), der dem Programmzähler zugeordnet ist, und einen Effektivadressen-Generatorkontroller (107), der zum Empfang der dekodierten Daten gekoppelt ist und zur Steuerung des Registerfiles (109) und des Effektivadressen-Addierers (110) dient, wobei das Aktualisieren des Programmzählers und die Erzeugung der Effektivadresse gleichzeitig ausgeführt werden.

## Revendications

1. Processeur comprenant un compteur de programme (108) utilisé pour indiquer une adresse d'instruction qui doit être lue, un moyen (112, 113) couplé au compteur de programme pour mettre à jour le compteur de programme, un moyen (109, 110, 111) couplé au compteur de programme pour exécuter un calcul d'adresse effective, caractérisé par un moyen (105, 107) pour commander indépendamment le moyen de mise à jour (112) et le moyen de calcul d'adresse effective (109) et par un moyen pour forcer le moyen de calcul d'adresse effective à se voir appliquer la valeur du compteur de programme avant la mise à jour du compteur de programme par l'adresse de l'instruction suivante.

2. Processeur selon la revendication 1, dans lequel le processeur peut traiter une instruction de longueur de mot variable, ledit compteur de programme (108) étant commandé pour indiquer la tête d'une instruction par la valeur du compteur de programme (108), comprenant en outre un moyen (106) pour sommer les longueurs de parties décodées dans l'instruction de longueur de mot variable conformément à la progression du décodage d'instruction, ledit moyen de mise à jour comprenant un moyen (112) pour additionner les longueurs des parties d'instruction décodées dans le compteur de programme et ledit moyen de calcul d'adresse effective (109, 110, 111) générant une adresse effective d'opérande relative au compteur de programme en utilisant la valeur du compteur de programme (108) au cours du décodage d'instruction de longueur de mot variable de telle sorte que la mise à jour du compteur de programme (108) et que la génération de l'adresse effective soient concurremment exécutées.

3. Processeur selon la revendication 2, incluant en outre un additionneur (106) utilisé seulement pour décaler le compteur de programme (108) de telle sorte que le nombre de fois où une addition de données binaires longues est effectuée directement sur le compteur de programme puisse être diminué.

4. Processeur selon la revendication 1, dans lequel ledit compteur de programme (108) est couplé à un bus d'instruction (121) et à un bus (122) pour un calcul d'adresse effective, ledit moyen de mise à jour comprenant un incrémenteur (113) et un additionneur (112), ledit processeur comprenant en outre un fichier registre couplé au bus d'instruction et au bus de calcul d'adresse effective pour enregistrer les données sur ces bus, un additionneur de calcul d'adresse effective (110) couplé au fichier registre (109) pour recevoir des données nécessaires, une bascule d'adresse effective (111) couplée à l'additionneur de calcul d'adresse effective (110) et émettant en sortie l'adresse effective calculée sur le bus de calcul d'adresse effective (122), un décodeur d'instruction (101) couplé au bus d'instruction (121) pour générer des données décodées, un contrôleur de requête d'instruction (102) couplé pour recevoir les données décodées, un générateur de nombre d'octets de requête d'instruction (103) couplé pour recevoir les données décodées afin de générer l'information de nombre d'octets, un contrôleur de mise à jour de compteur de programme (105) commandé par le contrôleur de requête d'instruction (102) de manière à commander la mise à jour du compteur de programme, un additionneur de décalage de compteur de programme (133) couplé au générateur de nombre d'octets de requête d'instruction (103) et au contrôleur de mise à jour de compteur de programme (105) pour appliquer une valeur de décalage à l'additionneur (106) associé au compteur de programme et un contrôleur de génération d'adresse effective (107) couplé pour recevoir les données décodées et pour commander le fichier registre (109) et l'additionneur d'adresse effective (110) et ainsi, la mise à jour du compteur de programme et la génération de l'adresse effective sont concurremment exécutées.
